# EUROPÄISCHE PATENTANMELDUNG

(11) **EP 2 209 067 A1**
(43) Veröffentlichungstag der Anmeldung: **21.07.2010**
(21) Anmeldenummer: 09150629.5
(22) Anmeldetag: 15.01.2009
(51) Int. Cl.: G06F 11/07, G06F 11/36

(54) **Mikroprozessoreinheit und Automatisierungsgerät**

(71) Anmelder: Siemens Aktiengesellschaft, 80333 München (DE)
(72) Erfinder: Hirmer, Gerald, 92708, Mantel (DE); Mössner, Rudolf, 93133, Burglengenfeld (DE)

(57) **Zusammenfassung**

Um eine Fehlersuche bei mikroprozessorgesteuerten elektrischen Geräten zu erleichtern, wird vorgeschlagen, eine Mikroprozessoreinheit (1), umfassend einen Mikroprozessor (2), um ein Auslesemittel (7) zu erweitern und mit dem Auslesemittel (7) Fehlerinformationen, welche über eine Fehlerschnittstelle (5) bereitgestellt werden, an ein Mittel (3) zur Verwaltung der Systemsoftware (8) zu koppeln.

## Beschreibung

Die Erfindung betrifft eine Mikroprozessoreinheit, umfassend einen Mikroprozessor, ein Mittel zur Verwaltung einer Systemsoftware, eine Fehlerschnittstelle zur Ausgabe von Fehlerinformationen und ein Mittel zur Erzeugung von Fehlerinformationen.

Des Weiteren betrifft die Erfindung ein Automatisierungsgerät zum Steuern von industriellen Prozessen mit einem Mikroprozessor.

In Mikroprozessoren werden üblicherweise Programme zum Lösen einer bestimmten Aufgabe abgearbeitet. Bei der Abarbeitung von unterschiedlichen Programmschritten der Programme kann es zu Fehlern bei der Verarbeitung des Programmcodes kommen, oder im Zusammenhang mit der verwendeten Hardware treten ungewollte Zustände auf. Um diese Fehler zu analysieren stellen Mikroprozessoren für externe Debug-Systeme umfangreiche Informationen zur Fehlersuche bereit. Hierzu gehören beispielsweise auch Trace-Aufzeichnungen, die es erlauben, den Programmfluss bzw. die Datenzugriffe des Mikroprozessors aufzuzeichnen. Für den Zugriff auf diese Daten wird ein externes Testsystem benötigt, dass mittels einer Adaption mit einer Hardwareschnittstelle des Mikroprozessors verbunden wird. Diese Hardwareschnittstelle kann daraus bestehen, dass an vorbestimmten Anschluss-Beinchen des Mikroprozessors Signale abgenommen werden und zu dem Prüfsystem weitergeleitet werden. In letzter Zeit hat sich jedoch bei den Mikroprozessoren ein Trend zu einer genormten JTAG-Schnittstelle als Test-Interface durchgesetzt. JTAG ist die Kurzform für Joint Test Action Groupe.

Fehlerinformationen, auch Debug-Informationen genannt, werden im Regelfall benötigt, wenn Fehler in komplexen Echtzeitapplikationen auftreten. Durch Auswerten einer Hardwaretrace-Aufzeichnung können im Regelfall auch hochdynamische Fehlersituationen mit Taskwechseln und Interrupts analysiert werden. Diese Methode ist sehr effizient, da kein zusätzlicher Code für die Fehlersuche in den dynamischen Ablauf der Applikation eingebracht wird, der das dynamische Verhalten verändert, und somit dazu führen kann, dass die Applikation nicht mehr korrekt arbeitet oder das Fehlverhalten nicht mehr auftritt.

Treten derartige dynamische Fehler nicht in den Testanlagen eines Produktherstellers auf, sondern bereits in ausgelieferten Geräten mit Kundenapplikationen, und sind diese zudem noch hoch sporadisch, so verursacht dies eine sehr aufwendige Fehlersuche.

Der Erfindung liegt die Aufgabe zugrunde, die Fehlersuche bei Mikroprozessoreinheiten zu vereinfachen.

Die Aufgabe wird dadurch gelöst, dass bei der eingangs genannten Mikroprozessoreinheit dem Mikroprozessor ein Auslesemittel zum Auslesen der Fehlerinformationen von der Fehlerschnittstelle und zum Bereitstellen der Fehlerinformationen für die Mittel zur Verwaltung der Systemsoftware zugeordnet ist. Durch ein Bereitstellen der Fehlerinformationen für die Mittel zur Verwaltung der Systemsoftware können die ausgelesenen zusätzlichen Fehlerinformationen oder auch Debug-Informationen, vorzugsweise zusammen mit weiteren Daten, z.B. einem teilweisen oder auch vollständigen Speicherabbild, im System gespeichert werden. Dies ist vorzugsweise bei schwerwiegenden Systemfehlern der Fall, die zu einem kontrollierten absteuern führen, welches auch Post-Mortem-Abbild genannt wird. Bei dynamisch korrigierbaren Fehlern kann die Fehlerinformation ebenfalls gespeichert werden, oder auch mittels vorhandener Kommunikationsschnittstellen direkt nach außen übertragen werden.

Es ist also besonders vorteilhaft, wenn der Fehler nicht auf Basis von standardmäßig vorhandenen Diagnoseinformationen im Gerät eingegrenzt werden muss, welcher einen Serviceeinsatz durch qualifiziertes Entwicklungspersonal, welche u.U. mit Hilfe eines externen Debug-Systems auf die zusätzlichen Debug-Informationen zugreifen.

Bei einer vorteilhaften Ausgestaltung der Mikroprozessoreinheit weist diese zusätzliche Fehlereingänge zum Einlesen der Fehlerinformationen zur Weiterverarbeitung in der Systemsoftware auf. Diese zusätzlichen Fehlereingänge sind vorzugsweise als Software stimulierbare Schnittstelleneingänge ausgestaltet. Vorzugsweise werden die Datenleitungen der JTAG-Schnittstelle mit den Eingängen des Prozessors, welche als GPIO's ausgestaltet sind, gekoppelt. GPIO ist die Abkürzung für General Propose Input Output. Diese GPIO's sind also eine Reihe von Ein-/Ausgängen, welche softwaretechnisch programmiert werden können bzw. durch geeignete Stimulation der GPIO's kann die Fehlerinformation vom Mikroprozessor ausgelesen, weiterverarbeitet und ausgewertet werden.

Daher ist es eine bevorzugte Ausgestaltung, wenn die Mikroprozessoreinheit mit einer Fehlerschnittstelle als eine JTAG-Schnittstelle und die Fehlereingänge zu den Mitteln zur Verwaltung der Systemsoftware als eine GPIO-Schnittstelle ausgestaltet und diese beiden Schnittstellen dabei intern gekoppelt sind.

Des Weiteren betrifft die Erfindung das eingangs genannte Automatisierungssystem zum Steuern von industriellen Prozessen mit einem Mikroprozessor, dabei wird die eingangs genannte Aufgabe dadurch gelöst, dass dem Mikroprozessor ein Auslesemittel zum Auslesen von Fehlerinformationen zugeordnet ist, wobei die Fehlerinformationen über eine Fehlerschnittstelle des Mikroprozessors mit Mitteln zur Verwaltung einer Systemsoftware bereitgestellt werden. Bei einem Hersteller von Automatisierungsgeräten, wie speicherprogrammierbaren Steuerungen, dessen Produkte weltweit im Einsatz sind, ist dies von erheblichem Vorteil, bei einer möglichen Fehlersuche des Automatisierungsgerätes, für den Fall dass eine spezielle Kundenapplikation auf diesem Automatisierungsgerät abläuft und durch den Mikroprozessor verarbeitet wird und es dabei zum Fehlerfall kommt.

Bei dem Automatisierungsgerät wird dabei bevorzugt das Auslesemittel mit einem Kommunikationsnetzwerk verbunden. Die Verbindung des Auslesemittels mit einem Kommunikationsnetzwerk, wie beispielsweise einem Feldbus und eine darauf folgende Ankopplung an ein Internet, lässt eine Fehleranalyse des betroffenen Automatisierungsgerätes auf einer Ferndiagnosestation zu. Es kann beispielsweise ein Automatisierungsgerät in einem Kraftwerk in Brasilien von Deutschland aus über das Internet auf mögliche Fehler untersucht werden. Nach Bereinigung des Fehlers kann die auf dem Mikroprozessor ablauffähige Applikation dementsprechend geändert werden und es kann dem Kunden eine neue fehlerfreie Applikation für den Mikroprozessor des Automatisierungsgerätes bereitgestellt werden. Mit der neuen Applikation arbeitet das Automatisierungsgerät nunmehr fehlerfrei.

Weitere Vorteile und ein Ausgestaltungsbeispiel der Erfindung sind in der Zeichnung näher erläutert. Es zeigen:
- FIG 1: eine Mikroprozessoreinheit und
- FIG 2: ein Automatisierungsgerät mit einem Anschluss für das Internet.

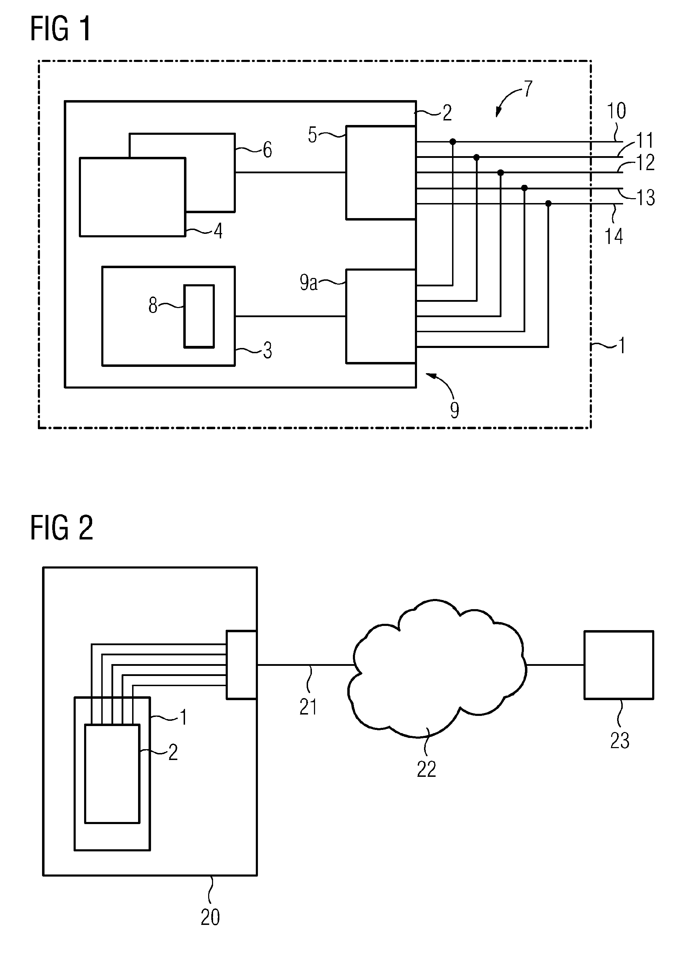

Gemäß FIG 1 ist eine Mikroprozessoreinheit 1 abgebildet. Die Mikroprozessoreinheit 1 umfasst einen Mikroprozessor 2 mit Mitteln 3 zur Verwaltung einer Systemsoftware 8. Weiterhin weist der Mikroprozessor 2 Mittel 4 zur Erzeugung von Signalen, welche an eine Fehlerschnittstelle 5 weiterleitbar sind, auf. Die Signale werden durch Mittel 6 zur Erzeugung von Fehlerinformationen interpretiert und an eine Fehlerschnittstelle 5 weitergegeben.

Die Fehlerschnittstelle 5 ist als eine JTAG-Schnittstelle mit fünf Datenleitungen ausgestaltet. Die fünf Datenleitungen setzen sich wie folgt zusammen. Eine Test-Clock-Leitung 10, eine Test-Mode-Select-Leitung 11, eine Test-Data-Input-Leitung 12, eine Test-Data-Output-Leitung 13 und eine Test-Reset-Leitung 14. In der aufgezählten Reihenfolge sind dem Fachmann diese Leitungen auch als TCK-, TMS-, TDI-, TDO- und TRST-Leitungen bekannt. An die Fehlerschnittstelle 5 ist ein Auslesemittel 7 angeschlossen, welche die Datensignale bezüglich der Fehlerinformationen auslesen und über Fehlereingänge 9 an eine GPIO-Schnittstelle 9a koppeln. Über diese GPIO-Schnittstelle 9a gelangen die ausgelesenen Fehlerinformationen zu den Mitteln 3 zur Verwaltung einer Systemsoftware 8 und können mittels der Systemsoftware 8 analysiert werden. Über einen zusätzlichen Logikbaustein, welcher mit den Leitungen 10 bis 14 in Verbindung steht, kann der Zugriff auf die Fehlerinformationen erleichtert werden.

Gemäß FIG 2 ist ein Automatisierungsgerät 20 als eine speicherprogrammierbare Steuerung mit einer Mikroprozessoreinheit 1, welche einen Mikroprozessor 2 gemäß FIG 1 aufweist, dargestellt. Unter der Annahme, dass der Mikroprozessor 2 über seine Fehlerschnittstelle 5 gemäß FIG 1 Fehlerinformationen bereitstellt, werden die Fehlerinformationen über das Auslesemittel 7 an den Mikroprozessor 2 zurückgekoppelt und es entsteht ein Debug-System. Da die Fehlerschnittstelle 5 mit ihren Leitungen 10 bis 14 an ein Kommunikationsnetzwerk 21 angeschlossen ist, kann eine Verbindung über ein Internet 22 mit einer Ferndiagnosestation 23 aufgebaut werden. In dieser Ferndiagnosestation 23 sitzt beispielsweise ein hochqualifizierter Entwickler, welcher mit einem derartig aufgebauten Debug-System den Fehler in der Applikation in Zusammenarbeit mit dem Mikroprozessor 2 aufspürt und mittels der Ferndiagnose den Fehler beseitigen kann.

In Systemen bzw. Geräten mit mehr als einem Mikroprozessor kann eine Verschaltung der Fehlerschnittstellen auch zwischen den unterschiedlichen Mikroprozessoren erfolgen, um die Fehleranalyse-Möglichkeiten zu erweitern.

## Patentansprüche

1. Mikroprozessoreinheit (1), umfassend
- ein Mittel (3) zur Verwaltung einer Systemsoftware (8),
- eine Fehlerschnittstelle (5) zur Ausgabe von Fehlerinformationen,
- ein Mittel (6) zur Erzeugung von Fehlerinformationen,
**dadurch gekennzeichnet, dass** dem Mikroprozessor (2) ein Auslesemittel (7) zum Auslesen der Fehlerinformationen von der Fehlerschnittstelle (5) und zum Bereitstellen der Fehlerinformationen für die Mittel (3) zur Verwaltung der Systemsoftware (8) zugeordnet ist.

2. Mikroprozessoreinheit (1) nach Anspruch 1, wobei der Mikroprozessor (2) zusätzliche Fehlereingänge (9) zum Einlesen der Fehlerinformationen zur Weiterverarbeitung in der Systemsoftware (8) aufweist.

3. Mikroprozessoreinheit (1) nach Anspruch 2, wobei die Fehlereingänge (9) als Software stimulierbare Schnittstelleneingänge ausgestaltet sind.

4. Mikroprozessoreinheit (1) nach einem der vorhergehenden Ansprüche, wobei die Fehlerschnittstelle (5) als eine JTAG-Schnittstelle und die Fehlereingänge (9) als eine GPIO-Schnittstelle zu den Mitteln (3) zur Verwaltung der Systemsoftware (8) ausgestaltet ist und die Schnittstellen intern gekoppelt sind.

5. Automatisierungsgerät (20) zum Steuern von industriellen Prozessen, mit einem Mikroprozessor (2),
**dadurch gekennzeichnet, dass** dem Mikroprozessor (2) ein Auslesemittel (7) zum Auslesen von Fehlerinformationen zugeordnet ist, wobei die Fehlerinformationen über eine Fehlerschnittstelle (5) des Mikroprozessors (2) mit Mitteln (3) zur Verwaltung einer Systemsoftware (8) bereitgestellt werden.

6. Automatisierungsgerät (20) nach Anspruch 5,
wobei das Auslesemittel (7) mit einem Kommunikations-Netzwerk (21) verbunden ist.

7. Automatisierungsgerät (20) nach Anspruch 5 oder 6,
wobei das Auslesemittel (7) mit einer als JTAG-Schnittstelle ausgestalteten Fehlerschnittstelle (5) und mit einer GPIO-Schnittstelle des Mikroprozessors (2) in Verbindung steht.
